(19) Europäisches Patentamt
European Patent Office
Office européen des brevets

(11) **EP 4 679 282 A1**

(12) **EUROPEAN PATENT APPLICATION**

(43) Date of publication:
**14.01.2026 Bulletin 2026/03**

(51) International Patent Classification (IPC):
***G06F 16/2453*** (2019.01)  ***G06F 16/2455*** (2019.01)

(21) Application number: **24315341.8**

(22) Date of filing: **11.07.2024**

(52) Cooperative Patent Classification (CPC):
**G06F 16/24539; G06F 16/24554**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Amadeus S.A.S.**
**06410 Biot (FR)**

(72) Inventors:
• **Laperrousaz, Vincent**
  **06410 Biot (FR)**
• **Montiel, Jeremie**
  **06410 Biot (FR)**
• **Bayram, Oktay**
  **06410 Biot (FR)**

(74) Representative: **Samson & Partner Patentanwälte mbB**
**Widenmayerstraße 6**
**80538 München (DE)**

(54) **METHOD AND APPARATUS FOR OPTIMIZATION OF QUERY PROCESSING**

(57) The subject disclosure relates to methods and systems of processing queries in a database system. The database system comprises a plurality of database tables, each database table comprising data values of a plurality of data parameters, and a plurality of table configurations indicating a set of database tables from among the plurality of database tables used to process previous search queries, each previous search query including search data values of search data parameters corresponding to one or more data values of the plurality of data parameters included in the database tables. For example, the method comprises: generating, based on the plurality of table configurations, a new table configuration indicating a new set of database tables to be used to process new search queries; generating a new database table corresponding to the new table configuration using the new set of database tables; and in response to receiving a new search query, selecting, from among the plurality of database tables including the new database table and based on the new search query, one or more database tables comprising data values of data parameters corresponding to search data parameters of the new search query.

FIG. 3

EP 4 679 282 A1

## Description

### TECHNICAL FIELD

The subject disclosure generally relates to computers and computer software, and in particular to methods, apparatuses, and computer program products of processing search query in a database system. More specifically, the subject disclosure pertains to such methods, apparatuses, and computer program products of optimizing search query processing.

### BACKGROUND

Recent developments in database technology show that it is a common issue to ensure short response times to search queries which require processing large volumes of data. For example, such processing has to be performed in response to so-called "open queries" which contain only little input information (e.g., only one or two parameters out of a dozen possible parameters are specified and/or the specified value ranges of the parameters are broad) and, consequently, lead to a large number of results in general. Possibilities to speed up data processing by increasing hardware performance are limited. Thus, attention is drawn to improving the mechanisms underlying the processing of large data volumes (i.e., large data volumes that need to be scanned) in a limited time and/or resource.

Aspects of the subject disclosure pertains to optimizing the processing of search query on large data volumes.

### SUMMARY

According to a first aspect of the subject disclosure, a method of processing search queries in a database system is provided. The database system comprises a plurality of database tables and a plurality of table configurations indicating a set of database tables from among the plurality of database tables used to process previous search queries. Each database table comprises, data values of a plurality of data parameters. Each previous search query includes search data values of search data parameters corresponding to one or more data values of the plurality of data parameters included in the database tables. The method comprises: generating, based on the plurality of table configurations, a new table configuration indicating a new set of database tables to be used to process new search queries; generating a new database table corresponding to the new table configuration using the new set of database tables; and in response to receiving a new search query, selecting, from among the plurality of database tables including the new database table and based on the new search query, one or more database tables comprising data values of data parameters corresponding to search data parameters of the new search query.

In some examples, the method further comprises: determining the plurality of table configurations based on a plurality of the previous search queries processed by the database system.

In some examples of the method, generating a new table configuration comprises generating the new table configuration based on statistics of the plurality of previous search queries and/or costs of processing resources associated with using one or more of the plurality of database tables to process the previous search queries.

In some examples of the method, generating a new table configuration comprises generating the new table configuration based on hierarchy information of a data model of the database system, the hierarchy information defining a hierarchy among the plurality of data parameters in the plurality of database tables.

In some examples of the method, generating a new table configuration comprises classifying and ranking database tables among the plurality of database tables to determine the new set of database tables being optimal in terms of costs and response times.

In some examples of the method, generating a new table configuration comprises:, determining one or more aggregations for data values of the plurality of data parameters comprised by the new set of database tables, wherein the one or more aggregations reduce a dimension of one or more database tables among the new set of database tables; and/or determining one or more partitions of the plurality of data parameters comprised by the new set of database tables, wherein the one or more partitions split one or more database tables among the new set of database tables.

In some examples of the method, generating a new database table comprises providing statistics on data values generated in the new database table.

In some examples of the method, selecting one or more database tables comprises: analyzing the new search query to determine, from among the plurality of database tables including the new database table (i.e., the newly generated database table), one or more candidate tables comprising data values of data parameters corresponding to one or more search data parameters of the new search query; determining, for each candidate table, a number of data values to be scanned to search for the data values of data parameters corresponding to the one or more search data parameters of the new search query; and re-writing, based on a response time and/or an amount of processing resources associated with scanning the determined number of data values, the new search query to generate a modified search query to be used for selecting the one or more database tables.

In some examples of the method, selecting one or more database tables comprises: analyzing the new search query to determine, from among the plurality of database tables including the new database table, one or more candidate tables comprising data values of data parameters corresponding to one or more search data parameters of the new search query; and evaluating the one or more candidate tables based on hierarchy information defining a hierarchy among the plurality of data parameters in the plurality of database tables to determine a smallest partition that is available to process the new search query.

In some examples of the method, generating a new table configuration and generating a new database table are performed asynchronously to selecting one or more database tables.

According to a second aspect of the subject disclosure, an apparatus of a database system is provided. The database system comprises a plurality of database tables and a plurality of table configurations indicating a set of database tables from among the plurality of database tables used to process previous search queries. Each database table comprises data values of a plurality of data parameters. Each previous search query includes search data values of search data parameters corresponding to one or more data values of the plurality of data parameters included in the database tables. The apparatus comprises: at least one processor; and at least one memory storing instructions that, when executed by the at least one processor, cause the apparatus to: generate, based on the plurality of table configurations, a new table configuration indicating a new set of database tables to be used to process new search queries; generate a new database table corresponding to the new table configuration using the new set of database tables; and in response to receiving a new search query, select, from among the plurality of database tables including the new database table and based on the new search query, one or more database tables comprising data values of data parameters corresponding to search data parameters of the new search query.

In some examples of the apparatus, the instructions cause the apparatus to: determine the plurality of table configurations based on a plurality of the previous search queries processed by the database system.

In some examples of the apparatus, to generate a new table configuration, the instructions cause the apparatus to generate the new table configuration based on statistics of the plurality of previous search queries and/or costs of processing resources associated with using one or more of the plurality of database tables to process the previous search queries.

In some examples of the apparatus, to generate a new table configuration, the instructions cause the apparatus to: generate the new table configuration based on hierarchy information of a data model of the database system, the hierarchy information defining a hierarchy among the plurality of data parameters in the plurality of database tables.

In some examples of the apparatus, to generate a new table configuration, the instructions cause the apparatus to: classify and rank database tables among the plurality of database tables to determine the new set of database tables being optimal in terms of costs and response times.

In some examples of the apparatus, to generate a new table configuration, the instructions cause the apparatus to: determine one or more aggregations for data values of the plurality of data parameters comprised by the new set of database tables, wherein the one or more aggregations reduce a dimension of one or more database tables among the new set of database tables; and/or determine one or more partitions of the plurality of data parameters comprised by the new set of database tables, wherein the one or more partitions split one or more database tables among the new set of database tables.

In some examples of the apparatus, to generate a new database table, the instructions cause the apparatus to: provide statistics on data values generated in the new database table.

In some examples of the apparatus, to select one or more database tables, the instructions cause the apparatus to: analyze the new search query to determine, from among the plurality of database tables including the new database table, one or more candidate tables comprising data values of data parameters corresponding to one or more search data parameters of the new search query; determine, for each candidate tables, a number of data values to be scanned to search for the data values of data parameters corresponding to the one or more search data parameters of the new search query; and re-write, based on a response time and/or an amount of processing resources associated with scanning the determined number of data values, the new search query to generate a modified search query to be used for selecting the one or more database tables.

In some examples of the apparatus, to select one or more database tables, the instructions cause the apparatus to: analyze the new search query to determine, from among the plurality of database tables including the new database table, one or more candidate tables comprising data values of data parameters corresponding to one or more search data parameters of the new search query; and evaluate the one or more candidate tables based on hierarchy information defining a hierarchy among the plurality of data parameters in the plurality of database tables to determine a smallest partition that is available to process the new search query.

In some examples of the apparatus, the instructions cause the apparatus to generate a new table configuration and generate a new database table asynchronously to selecting one or more database tables.

According to a third aspect of the subject disclosure, a database system is provided. The database system comprises: a plurality of database tables and a plurality of table configurations indicating a set of database tables from among the plurality of database tables used to process previous search queries. Each database table comprises data values of a plurality of data parameters. Each previous search query includes search data values of search data parameters corresponding to one or more data values of the plurality of data parameters included in the database tables. The database system further comprises the apparatus to process search queries according to the second aspect and its examples.

According to a third aspect of the subject disclosure, a computer program product is provided. The computer program product comprises instructions which, when executed by a computer, cause the computer to perform the method according to the first aspect and its examples.

According to a fourth aspect of the subject disclosure, a computer-readable medium is provided. The computer-readable medium has stored thereon the computer program product according to the third aspect.

The above summary presents a simplified summary in order to provide a basic understanding of some aspects of the methods and/or apparatuses discussed herein. This summary is not an extensive overview of the systems and/or methods discussed herein. It is not intended to identify key/critical elements or to delineate the scope of such systems and/or methods. Its sole purpose is to present some concepts in a simplified form as a prelude to the more detailed description that is presented later.

BRIEF DESCRIPTION OF THE DRAWINGS

The accompanying drawings illustrate various embodiments of the subject disclosure and, together with the general description given above, and the detailed description of the embodiments given below, serve to explain the embodiments of the subject disclosure. In the drawings, like reference numerals are used to indicate like parts in the various views.

> FIG. 1 shows an exemplary database system, in which a method of processing search queries may be performed.
> FIGS. 2A and 2B illustrate concepts for partitioning and aggregating, which may be applied to the exemplary database system of FIG. 1.
> FIG. 3 shows a method of processing search queries in accordance with the subject disclosure.
> FIG. 4 illustrates a schematic diagram of a database system for processing search queries in accordance with the subject disclosure.
> FIG. 5 is a simplified schematic diagram showing the interoperation of components of the database system of FIG. 4.
> FIGS. 6A to 6C show simplified examples related to the subject disclosure.
> FIG. 7 shows a schematic representation of a computer system in accordance with the subject disclosure.

DETAILED DESCRIPTION

Before turning to the detailed description of embodiments, some more general aspects on involved techniques will be explained first.

The subject disclosure generally pertains to processing queries in a database system and more specifically, to optimizing query processing in the database system.

The term "query" includes all types of database requests including e.g. read requests to search and retrieve data and write requests to insert, change or delete data. Hereinbelow, read requests will also be referred to as search requests or search queries to search data and write requests will also be referred to as modification requests or modification queries to modify (i.e., insert, change or delete) data. Although aspects of the subject disclosure will be described with respect to search queries, the aspects may also be applicable to other types of database requests.

The subject disclosure relates to methodologies for optimizing query processing in the database system.

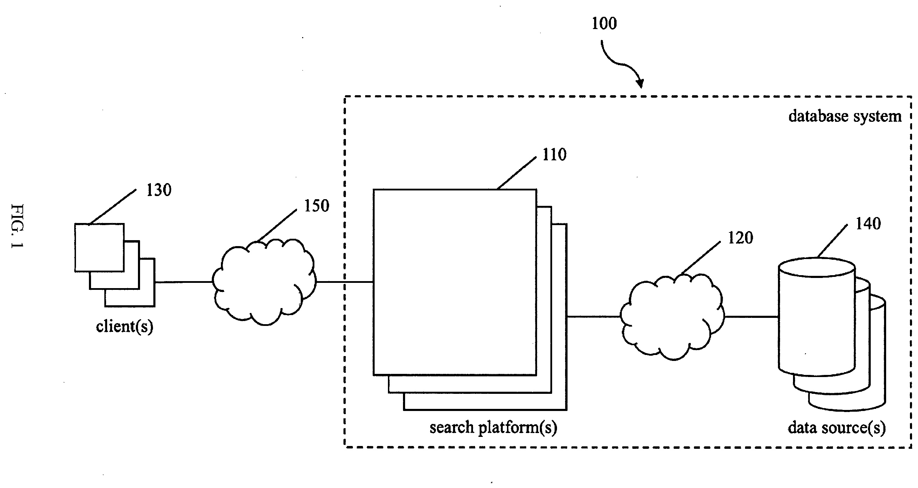

FIG. 1 shows a computing system such as a database system 100, comprising a search platform 110, a communication interface 120, a plurality of clients 130 and a data source 140. The search platform 110 is communicatively coupled to the plurality of clients 130 as well as, via the communication interface 120, to the data source 140.

The search platform 110, the plurality of clients 130 and the data source 140 may be located anywhere and are individual computing machines such as personal computers, mobile stations such as laptops or tablet computers, smartphones, and the like, as well as, in some embodiments, more powerful machines such as database application servers, distributed database systems respectively comprising multiple interconnected machines, data centers etc. In some examples, the search platform 110, the client(s) 130 and the data source 140 may be implemented using similar machines and/or platforms. In other examples, the search platform 110, the client(s) 130 and the data source 140 may be implemented using different machines and/or platforms. The different machines and/or platforms may be different with respect to e.g. performance and efficiency. In one example, the search platform 110, the client(s) 130 and the data source 140 may be data centers, distributed or located at one or more premises. The search platform 110 may act as a server towards the client(s) 130, processing and serving requests of the client(s) 130.

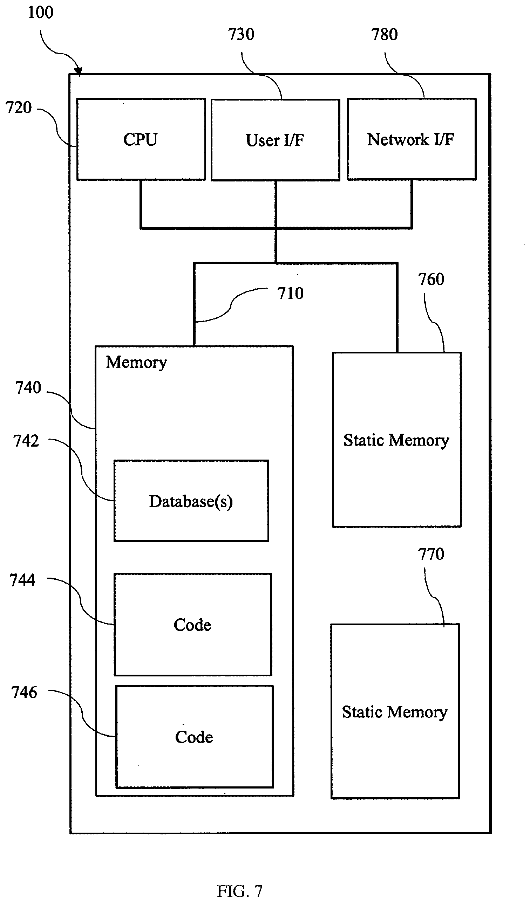

The search platform 110, the client(s) 130 and the data source 140 may be constituted of several hardware machines depending on performance requirements. The search platform 110, the client(s) 130 and the data source 140 may be embodied e.g. as stationary or mobile hardware machines comprising computer system 700 as illustrated in FIG. 7 and/or as specialized systems such as embedded systems arranged for a particular technical purpose, and/or as software components running on a general or specialized computing hardware machine (such as a web server and web clients).

The search platform 110 and the data source 140 may be interconnected by communication interface 120, utilizing a wired or wireless Local Area Network (LAN) or a wireline or wireless Metropolitan Area Network (MAN) or a wired or wireless Wide Area Network (WAN) such as the Internet or a combination of the aforementioned network technologies and are implemented by any suitable communication and network protocols. In some examples, the communication interface 120 may comprise the communication means of the data source 140, such as the communication sockets opened by the data source 140.

The search platform 110 and the client(s) 130 may be interconnected by an interface 150, utilizing a wired or wireless Local Area Network (LAN) or a wireline or wireless Metropolitan Area Network (MAN) or a wired or wireless Wide Area Network (WAN) such as the Internet or a combination of the network technologies and are implemented by any suitable communication and network protocols.

The search platform 110 may maintain precomputed or pre-collected data to decrease response times to answer search queries as compared to times required to retrieve the data from the data source 140 and performing computation thereon to obtain search results. In this regard, the terms "pre-computed" and "pre-collected" are used to cover any sort of pre-computation and pre-collection such as selection of data from the data source 140 but may also involve complex and time-intensive computations of search results based on the data from the data source 140.

The data source 140 which may also be referred to herein as database or master dataset stores a plurality of data records. The database or master dataset may be defined and structured in accordance with a data model. The term "database" as used herein is meant to encompass any types of structured information storage system such as standard stand-alone databases like SQL or Non-SQL databases as well as complex, distributed and/or proprietary databases, relational databases or object-oriented databases.

In some examples, the database or master dataset may be a relational database defined based on a relational data model. According to the relational data model, the data is organized in the database or master dataset into one or more database tables (or relations) of columns and rows, with a unique key identifying each row. The rows are also called records or tuples, while the columns are called database attributes or database parameters. Each row in a database table may have an own unique key and rows in a database table may be linked to rows in other database tables by adding a column for the unique key of the linked row (such columns are called foreign keys). The relations or relationships represent a logical connection between different database tables (entities), established on the basis of interaction among the database tables. That is, as used herein, the database or master database comprises a plurality of database tables, each database table comprising a plurality of data parameters (i.e., columns of the database table) and a plurality of data values (i.e., rows of the database table) for the data parameters, representing the data or data records.

The term "data" or "data records" as used herein means data that is valid and that forms the basis for all data processing within the database system 100. "Data" or "data records" as used herein means any type of structured information such as records, arrays, parts of database tables (e.g., columns, lines, or entries), or the like. In some examples, the data may concern any type of information in a particular domain. For example, the data may be in the field of travel information and travel bookings and contain information related to travel such as hotel information, flight information, car rental information, and the like. For example, the flight information may include information regarding flight number, departure date/time (e.g., year, month, day, hour, minute, etc.), departure airport (e.g., continent, country, city, name of airport, etc.), arrival date/time, arrival airport, available and bookable seats, etc. Such data related to travel information and travel bookings is kept in the data source 140 and may be queried by a computing system on which a travel booking system is executed, e.g., via the search platform 110, to retrieve travel information and perform (i.e., write or update data) travel bookings. However, although aspects of the subject disclosure are described herein with reference to the field of travel information and travel bookings, the subject disclosure is not limited thereto. The aspects of the subject disclosure are applicable to any data in any domain irrespective of the content and semantics of the data.

Typically, the database system 100 and the data source 140 is intended to store a large amount of data or data records. Such large amount of data or data records comprises a large number of data parameters and/or a large number of data values. The processing of search queries to search for data in such databases or master datasets are resource intensive, at least in terms of response time, amount of resources, and costs associated with the processing, etc.

In other to allow running search queries on such databases or master datasets (i.e., - such large amount of data) and/or to reduce response time, costs, etc. several concepts are used.

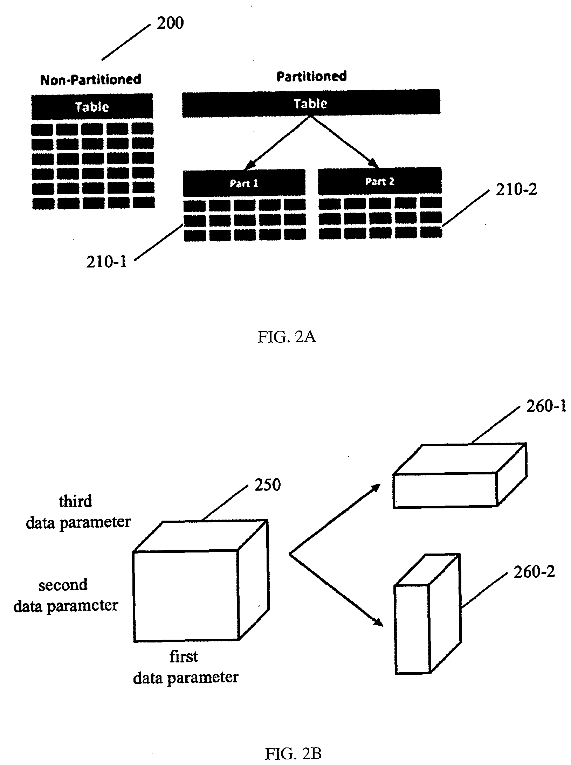

A first concept concerns partitioning of database tables as illustrated in FIG. 2A. According to this concept, a non-partitioned (i.e., prior to performing the partitioning) database table 200 is divided into a large number of sub-database tables 210-1 and 210-2 (referred to as partitions) having a reduced size compared to a size of the non-partitioned database table. The partitioning of the non-partitioned database table 200 is typically carried out with regard to one or more database parameters in such a way that each of the sub-database tables 210-1 and 210-2 comprises the database parameters of the non-partitioned database table 200 (i.e., the same layout as the non-partitioned database table 200), except the one or more database parameters with respect to which the partitioning is performed (i.e., that are used to generate the respective partition).

The partitioning according to the first concept reduces the size of the sub-database tables and thus the amount of data to be searched or processed, helping to optimize search queries when the search query contains the database parameter that was used for partitioning as a search parameter. The reduction of the size may lead to a reduction of the response time, the costs, etc.

A second concept concerns aggregation of data to reduce the dimensionality of database tables as illustrated in FIG. 2B. According to this concept, data values related to one or more database parameters of a database table 250 are combined (aggregated) in accordance with a function (i.e., an aggregation function) into an aggregated data value (e.g., a plurality of data values are combined to a single database value). For example, the mean value, the minimum or maximum or the sum may be determined from the plurality of data values. The aggregated data value is used as a substitute for the plurality of data values. For example, as shown in FIG. 2B, aggregations applied onto the database table 250 having three database parameters (i.e., dimension of the database table is three) may result in two aggregated database tables 260-1 and 260-2, each having a reduced dimension of two (i.e., two database parameters). In the example, the aggregations are performed with respect to a data parameter by applying an aggregation function onto the data values for the data parameter. As shown, the aggregated table 260-1 having aggregated data values of the first data parameter is the result of aggregating with respect to the first data parameter, while the aggregated table 260-2 having aggregated data values of the second data parameter is the result of aggregating with respect to the second data parameter.

Other concepts which may be used to allow running search queries on such databases or master datasets involve caching results of previous search queries, sampling by scanning limited portions of database tables and extrapolating results, and scaling by increasing platform capacity. The caching of results (also including pre-computation or pre-collection as described herein) results in faster response times in the case new search queries correspond to previous search queries. That is, caching applies only to stable search queries (i.e., new search queries correspond to previous search queries) and/or to data having low variability as otherwise the cached results become outdated. The sampling may have drawbacks in view of accuracy due to scanning and forecasting (i.e., extrapolating). Although the scaling enables faster scanning, it requires more hardware and therefore results in higher costs for operation, etc.

However, in the database system 100, the search queries to be processed are predictable to a certain extent only. That is, since the number of data parameters and data values in the database or master dataset is large, the search queries may be directed to data values of any possible combination of data parameters of the database tables and may also comprise applying several functions such as filtering onto the searched data values, resulting in an unpredictable number of possible combinations. The above concepts are superior in view of such unpredictable search queries such that concepts are required for optimizing the processing with respect to such unpredictable search queries in large data sets. Aspects of the subject disclosure are directed to optimizing such processing, thereby providing optimization in terms of response time, costs, etc.

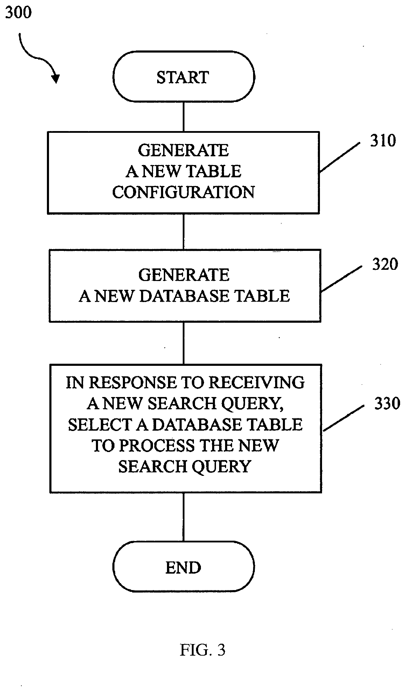

Now, the method of processing search queries, as an aspect of the subject disclosure, will be described in more detail with reference to FIG. 3.

The method 300 is performed in a database system such as the database system 100 described with reference to FIG. 1. The database system comprises a plurality of database tables forming at least one master dataset in which data records to be used for processing search queries are stored. Each database table comprises a plurality of data parameters and a plurality of data values for the plurality of data parameters. A data record is formed by a tuple of data values for a set of data parameters among the plurality of data parameters. The database system further comprises a plurality of table configurations. The table configurations indicate a set of database tables from among the plurality of database tables used to process previous search queries.

The previous search queries comprise search queries already processed by the database system. The database system stores or logs information about the previous search queries, which were processed by the database system, together with additional information such as, without limitation, costs for processing these queries and information about search results obtained by processing the search queries. Each of the previous search queries is to search data values for a set of search data parameters specified by the search queries. In processing the previous search queries, the database system searches in the plurality of database tables for data parameters that correspond to the set of search data parameters specified by the search queries. For the set of search data parameters, the database system obtains, from the plurality of database tables, the data value(s) of the data parameters corresponding to the set of search data parameters and returns the obtained data value(s). In some examples, the search queries may also comprise aggregation and/or filtering rules which may be applied on the obtained data value(s), for example. The set of database tables as indicated by the table configurations comprises data parameters from among the plurality of database parameters that correspond to one or more among the set of search data parameters and the data values thereof.

The method 300 starts in operation 310 with generating a new table configuration. The database system or more specifically a table optimizer of the database system generates the new table configuration based on the plurality of table configurations. The new table configuration indicates a new set of database tables from among the plurality of database tables of the database system. The new set of database tables is to be used to process new search queries (i.e., future and thus unpredicted search queries). More specifically, in operation 310, the database system or the table optimizer takes the plurality of table configurations which indicates database tables from among the plurality of database tables which were used to process previous search queries and determines, based thereon, information about database tables from among the plurality of database tables that were used, in conjunction or in combination, to process previous search queries and that may therefore be used to process future search requests. Based on such information, the new table configuration is determined to indicate the database tables which may be used to process future search queries. In some examples, the table optimizer may also determine a set of database parameters of the set of database tables indicated by the plurality of table configurations and generate the new table configuration indicating the new set of database tables associated with, or including, database parameters of the determined set of database parameters.

In some examples, the new table configuration may be generated based on statistics of the plurality of previous search queries and/or costs of processing resources associated with using one or more of the plurality of database tables to process the previous search queries.

The statistics may be determined based on the previous search results. For example, the statistics may indicate distributions related to the search data parameters of the previous search requests or combinations of search data parameters of the previous search requests. Additionally, or alternatively, the statistics may indicate probabilities that a particular search data parameter or a particular combination of search data parameters was specified by the previous search requests. In some examples, the statistics may also indicate distributions related to database parameters of the database tables or combinations of database parameters of the database tables that were needed to process the previous search queries. Additionally, or alternatively, the statistics may indicate probabilities that a particular data parameter or a particular combination of data parameters was needed to process the previous search queries. Thus, the statistics indicate which of the database tables (alternatively, data parameters of the database tables) from among the plurality of database tables of the database system were needed to process previous search queries.

In some examples, the new table configuration may be generated using techniques of machine learning in connection with probabilistic models associated with the previous search queries. For example, the techniques for machine learning may, given a plurality of previous search queries, particularly a plurality of search data parameters and/or the combination of the search data parameters, build a probabilistic model to predict a search data parameter or a combination of search data parameters of future search queries. In other words, the techniques of machine learning are used to predict search data parameters of future search queries or database tables (alternatively, data parameters of database tables) needed to process future search queries.

The costs of processing resources associated with using one or more of the plurality of database tables to process the previous search queries may relate to any metric relating to resources used in processing. Examples of costs comprise an amount of the resources (e.g., processor, memory, disk space, etc.), (financial) costs (e.g., in terms of Financial Operations (FinOps), and/or any indication making usage of a particular resource or a combination of resources comparable.

The method 300 proceeds with operation 320 to generate one or more new database tables corresponding to the new database table configuration. The one or more new database tables is generated using the new set of database tables as indicated by the new database table configuration. The database system or more specifically a table generator of the database system receives the new database table configuration from the table optimizer (for example) and generates the one or more new database tables for the new database table configuration. For example, the table generator retrieves the database tables that correspond to the new set of database tables indicated by the new database table configuration from among the plurality of database tables. Based on the retrieved database tables, the table generator builds or forms the one or more new database tables. More specifically, the table generator combines the retrieved database tables and thereby forms the one or more new database tables. The one or more new database tables generated in operation 320 are used to process future search queries.

In some examples, specifically in the case the new table configuration indicates data parameters for the new set of database tables, the table generator may retrieve the database tables, extract the data parameters from the retrieved database tables and combine the data parameters to form the one or more new database tables.

In operation 330, a new search query is processed. The database system or more specifically a table selector of the database system receives a new search request including search data values of search data parameters. The database system or the table selector selects one or more database tables from among the plurality of database tables including the one or more new database tables generated in operation 320. The selection of the one or more database tables is based on the new search query. The selected one or more database tables comprise data values of data parameters corresponding to the search data parameters of the new search request. In other words, the database system or the table selector uses, among others, the generated one or more new database tables to process new (i.e., future) search queries.

In some examples, the method 300 may comprise determining the plurality of table configurations based on the previous search queries. As described above, the database system comprises the plurality of table configurations each indicating a set of database tables used to process the previous search queries. The database system collects a plurality of previous search queries by storing or logging. The database system or more specifically the table optimizer uses the plurality of the stored previous search queries to determine the plurality of table configurations. For example, the table generator may analyze the plurality of previous search queries to determine the set of database tables used to process the previous search queries and statistics of the plurality of previous search queries. More specifically, the table optimizer may determine the search data parameters of each of the plurality of previous search queries and then determine, based on the determined search data parameters, which of the database tables have data parameters that correspond to the determined search data parameters, thereby determining the set of database tables used to process the previous search queries. Based on the set of database tables and the statistics determined, the table generator may determine the plurality of table configurations.

In some examples, in the operation 320, the new table configuration may be generated based on hierarchy information of a data model of the database system.

The data model refers to a model or data structure specifying as to how elements (e.g., database tables or data parameters) are organized and how these elements relate to each other. For example, in the field of travel information and travel booking, a data model may specify that a data element representing a flight comprises information about a flight number, a departure date/time, a departure airport, an arrival date/time, an arrival airport, available and bookable seats, etc. Each of the departure date/time and the arrival date/time may comprise information about a year, a month, a day, an hour, a minute, etc. Likewise, each of the departure airport and the arrival airport may comprise information about a continent, a country, a city, a name of airport, etc. The data model may also specify an arrangement of the data elements and thus a hierarchy among the data elements such that the data elements are represented as being above, below, or at the same level as one another. In the field of travel information and travel booking, the hierarchy may specify a continent such as Europe at the top or first level, a country such as France at a second level below the first level, a city such as Paris at a third level below the second level, and names of airports such as Charles de Gaulle Airport and Orly Airport at a fourth level below the third level.

In the operation 320, the information about the hierarchy may be used to generate the new table configuration. For example, based on the hierarchy information of the data model, the database system or table optimizer may determine that at least part of the plurality of configurations indicate database tables or data parameters having a particular relation according to the hierarchy and may therefore, for example, be combined such that a database table or data parameter at a higher level in the hierarchy may be used. In such a case the database table or data parameter at the higher level in the hierarchy used instead of the database tables or data parameters indicated may be used in generating the new table configuration.

In some examples, in the operation 320, generating the new table configuration may comprise classifying and ranking database tables among the plurality of database tables. The classification and ranking of the database tables may be performed based on information about costs such as the amount of processing resources as described above, information about response times, information about a number of data values included in the database tables and thus the number of data values to be processed in processing the search queries, etc. As a result of the classification and ranking, the new table configuration is to be generated such that the new table configuration indicates the new set of database tables that is optimal in terms of e.g. costs and response time. For example, the query costs and response time being optimal among the query costs and response times related to using the database tables are determined, thereby determining a database table that is optimal. For example, in the field of travel information and travel booking, a first database table of flight-related information comprising a first number of data parameters and a first number of data values may be classified and ranked to be more optimal compared to a second database table of flight-related information because the second database table of flight-related information comprises a second number of data parameters which is less than the first number of data parameters but a second number of data values significantly greater than the first number of data values. Since scanning the second number of data values in the second database table of flight-related information takes longer and/or requires a greater amount of processing resources (i.e., higher costs) than scanning the lower first number of data values of the first database table of flight-related information, the first database table of flight-related information is optimal compared to the second database table of flight-related information in terms of response time and costs. The first database table of flight-related information is therefore used in generating the new table configuration.

In some examples, in the operation 320, generating the new table configuration may comprise determining one or more aggregations for data values of the plurality of data parameters comprised by the new set of database tables and/or determining one or more partitions of the plurality of data parameters comprised by the new set of database tables. The one or more aggregations are performed as described above to reduce a dimension of one or more database tables of the new set of database tables. For example, in the field of travel information and travel booking, one or more pieces of information such as departure dates/times related to flights from a specific airport to another specific airport may be aggregated to form combined information, thereby reducing the dimension of the database table storing the one or more pieces of information. The one or more partitions are performed as described above to split one or more database tables among the new set of database tables. For example, in the field of travel information and travel booking, a database table storing flight-related information related to a specific city of departure may be split into a database table storing the flight-related information related to a specific airport in the city of departure and another database table storing the flight-related information related to another specific airport in the city of departure, thereby reducing the size of the database tables and thus accelerating processing of data (e.g., data filtering).

In some examples, in the operation 320, generating the new table configuration may comprise providing statistics on data values generated in the new set of database tables and/or the new table configuration. For example, the database system or the table optimizer may determine statistics relating to the number of data values and/or data parameters of the database tables that were e.g. scanned to process previous search queries to allow determining a number of data values and/or data parameters in the database table of the new set of database tables that is to be scanned in processing new search queries.

In some examples, in the operation 330, selecting one or more database tables to process the new search query may comprise analyzing.the new search query to determine, from among the plurality of database tables including the new database table, one or more candidate tables comprising data values of data parameters corresponding to one or more search data parameters of the new search query. The selecting may further comprise determining, for each candidate table, a number of data values to be scanned to search for the data values of data parameters corresponding to the one or more search data parameters of the new search query. Based on a response time and/or an amount of processing resources (e.g., costs) associated with scanning the determined number of data values, the new search query may be re-written to generate a modified search query to be used for selecting the one or more database tables.

For example, the database system or more specifically, the table selector may analyze the new search query to determine the search data parameters of the new search query. Based on the determined search data parameters, the database system or the table selector may determine candidate tables from among the plurality of database tables that comprise data parameters corresponding to the determined search data parameters and therefore usable to process the new search query. The database system or the table selector may determine the number of data values for each of the determined candidate tables. Based on the determined number of the data values, the database system or the table selector may determine a response time and/or costs to scan the data values of each candidate table. Typically, the more data values to be scanned, the higher the response time and/or the costs are. Based thereon, the database system or the table selector re-writes the new search query to generate the modified search query which is more optimal in terms of the response time and/or costs. The modified search query may then be used by the database system in selecting the database tables to be used in processing the modified search query and thus the new search query.

In some examples, in the operation 330, selecting one or more database tables to process the new search query may comprise analyzing the new search query to determine, from among the plurality of database tables including the new database table, one or more candidate tables comprising data values of data parameters corresponding to one or more search data parameters of the new search query and evaluating the one or more candidate tables based on hierarchy information defining a hierarchy among the plurality of data parameters in the plurality of database tables to determine a smallest partition that is available to process the new search query. For example, the database system or more specifically the table selector may determine pruned partitions of the plurality of database tables that are as small as possible to process the new search query and select the one or more database tables including the pruned partitions. For example, the database system or more specifically the table selector may use hierarchy information defining a static hierarchy (e.g., a hierarchy related to geographical information such city, country, continent; a hierarchy related to calendar information such as day, month, year) to determine the smallest partition. In another example, the database system or more specifically the table selector may use hierarchy information defining a dynamic hierarchy based on input from e.g. the table optimizer.

In some examples, the operation 310 of generating the new table configuration and the operation 320 of generating the new database table may be performed asynchronously to the operation 330 of selecting the one or more database tables. For example, while selecting the one or more database tables (i.e., operation 330) may be performed as an online process, generating the new table configuration and generating the new database table may be performed as offline processes.

According to the subject disclosure, the methods of processing search queries as described above allow to optimize search query processing. More specifically, the method 300 according to the subject disclosure and its examples allows to limit response time (i.e., achieves fast response time) in processing search queries while saving costs of processing resources such as hardware resources. The limitation on the costs of the processing resources enables scaling down the database system and/or a platform associated with the database system. In addition, the method according to the subject disclosure and its examples enable to provide database products (e.g., unconstrainted visualization).

In the following, it will be briefly explained how a database system 400 such as the database system 100 shown in FIG. 1 processes search queries in accordance with an aspect of the subject disclosure.

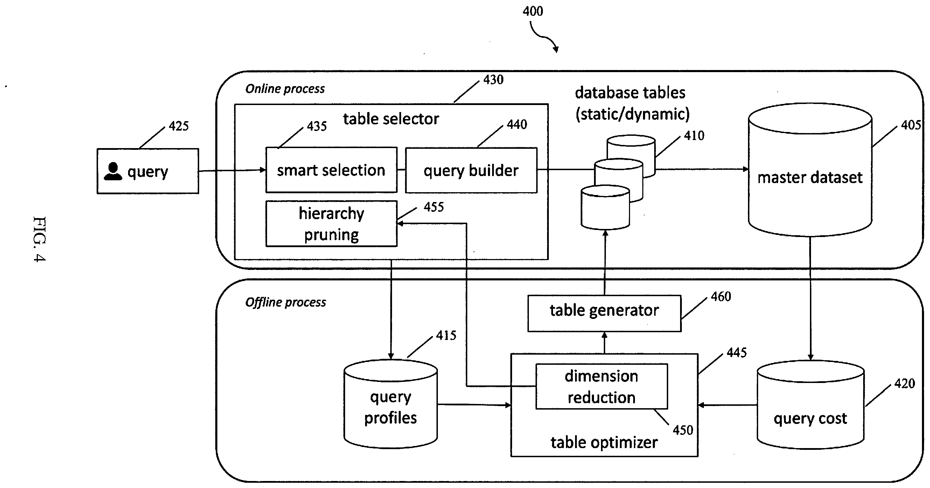

FIG. 4 illustrates a schematic diagram of the database system 400 for processing search queries in accordance with an aspect of the subject disclosure.

The database system 400 comprises a plurality of database tables forming at least one master dataset 405 in which data records to be used for processing search queries are stored. Each database table comprises a plurality of data parameters and a plurality of data values for the plurality of data parameters. The database system 400 further comprises a plurality of table configurations (not shown). The table configurations indicate a set of database tables 410 from among the plurality of database tables of the master dataset 405 used to process previous search queries.

The previous search queries comprise search queries already processed by the database system 400. Each of the previous search queries is to search data values for a set of search data parameters specified by the previous search queries. The database system 400 processed the previous search queries as follows:

In response to receiving a search query 425 from a user (e.g., a client 130 shown in FIG. 1), a table selector 430 analyses the search query 425 to determine, from among the plurality of database tables 410, one or more candidate tables comprising data values of data parameters corresponding to at least one of the search data parameters of the search query 425. The selection of the one or more candidate tables is referred to herein as smart selection 435 as it may use techniques of machine learning and artificial intelligence using information of a data model of the master dataset 405 and/or information on the database tables 410. For each of the candidate tables, the table selector 430 may determining costs involved in using the candidate table to process the search query 425. Examples of the costs include a number of data values to be scanned to search for the data values of data parameters corresponding to the at least one of the search data parameters of the search query 425. Based on the determined costs, the table selector 430 and more specifically a query builder 440 re-writes the search query 425 to generate a modified search query to be used for selecting the one or more database tables 410 that are to be used for processing the search query 425. To re-write the search query 425, the query builder 440 may also take into account a response time and/or an amount of processing resources associated with scanning the determined number of data values. The database system 400 then processes the (modified) search query 425 using the selected database tables and provides the results (i.e., the data values for the set of search data parameters of the search query 425) to the user (e.g., the client 130 of FIG. 1).

In other words, the table selector 430 selects the best database table to perform the search query depending on table statistics and search query details.

The database system 400 stores information about the search query 425 and thus generates a query profile 415 comprising the information about the previous search queries. The database system 400 may also store information about costs for processing the search query 425 and thus generate query cost 420 comprising information about costs for processing the previous search queries.

In some examples, the operations to process search queries, including the operation of the table selector 430, the database tables 410 and the at least one master dataset 405 may represent part of an online process of the database system 400.

As an aspect of the subject disclosure, the database system 400 or more specifically a table optimizer 445 generates a new table configuration based the query profiles 415. More specifically, the table optimizer 445 uses the plurality of table configurations (not shown) to generate the new table configuration indicating a new set of database tables from among the plurality of database tables of the at least one master dataset 405. The new set of database tables may be used to process new search queries (i.e., future, unpredicted search queries). In some examples, the table optimizer 445 may use the query costs 420 and thus statistics of the plurality of previous search queries and/or costs of processing resources (e.g., an amount of resources in terms of CPU, memory, disk, etc. but also costs of using such resources).

In some examples, the table optimizer 445 may perform operations to reduce a dimension of database tables of the new set of database tables (operation 450 shown in FIG. 4). For example, the table optimizer 445 may generate the new table configuration based on hierarchy information of the data model of the database system 400, as detailed above with reference to operation 320 shown in FIG. 3. Additionally, or alternatively, the table optimizer 445 may perform classifying and ranking operations as well as aggregation operations as detailed above with reference to operation 320 shown in FIG. 3. The table optimizer 445 may provide information about the new table configuration and/or the new set of database tables such as information about smallest partitions as described above and information related to hierarchy pruning 455 that is to be used by the table selector 430 in processing new search queries.

In other words, the table optimizer 445 analyses search query logs and costs to determine an optimized database table to answer new search queries or at least n-percentile thereof. The table optimizer 445 may use an unsupervised learning model:

$$Cost_{Query} = Cost_{Platform} + Cost_{Usage}$$

where

$$Cost_{Platform} = Cost_{Generation} * Refresh$$

$$Cost_{Usage} = Cost_{Scan} * Frequency$$

The database system or more specifically a table generator 460 generates a new database table based on the new database table configuration. The new database table is generated using the new set of database tables as indicated by the new database table configuration. The table generator 460 provides the new database table as part of the set of database tables 410 used to process new search queries. The new database table may represent a dynamic database table among the set of the database tables 410 as it is generated based on information about previous search queries and costs. Such dynamic database tables may be updated or modified during operation of the database system 400. The set of database tables 410 may also comprise static database tables that are not updated or modified during operation of the database system 400.

In other words, the table generator 460 creates a new database table based on the recommendation of the table optimizer 445.

In some examples, the table optimizer 445 may provide statistics on the data values generated in the new set of database tables and/or the new table configuration. The statistics may form part of the query cost 420.

In some examples, the operations related to the table optimizer 445 and the table generator 460 may represent part of an offline process of the database system 400. In other words, generating the new table configuration and generating the new database table may be performed asynchronously to processing search queries (e.g., selecting the one or more database tables).

In response to receiving a new search query, the database system 400 or the table selector 430 may act as described above and select the database tables from among the plurality of database tables 410 including the new database table. Additionally, the table selector 430 may evaluate the one or more candidate tables to determine a smallest partition that is available to process the new search query as described above (referred to as hierarchy pruning 455).

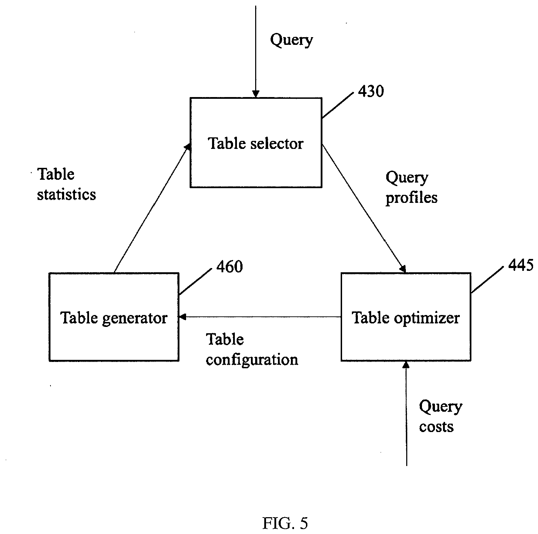

FIG. 5 is a simplified schematic diagram showing the above-described interoperation of the table selector 430, the table optimizer 445 and the table generator 460 of the database system 400. As shown, the table selector 430 receives the search queries and provides query profiles (i.e., information about the processed search queries) to the table optimizer 445. The table optimizer 445 uses the query profiles and query costs to generate a table configuration that is provided to the table generator 460. The table generator 460 provides, among others, table statistics to the table selector 430.

Note that the present methodologies as described above, if applied in the database system 400, do not necessarily have to be applied for all search queries received in the database system 400. For example, the database system 400 may apply the methodologies for some types of search queries, but may not apply the methodologies for other types of search queries which are then handled in a traditional manner. Or the database system 400 may apply the methodologies for search queries from some clients, but not for search queries from other clients. Or the database system 400 may apply the methodologies during some periods of time, but not during other periods of time, etc.

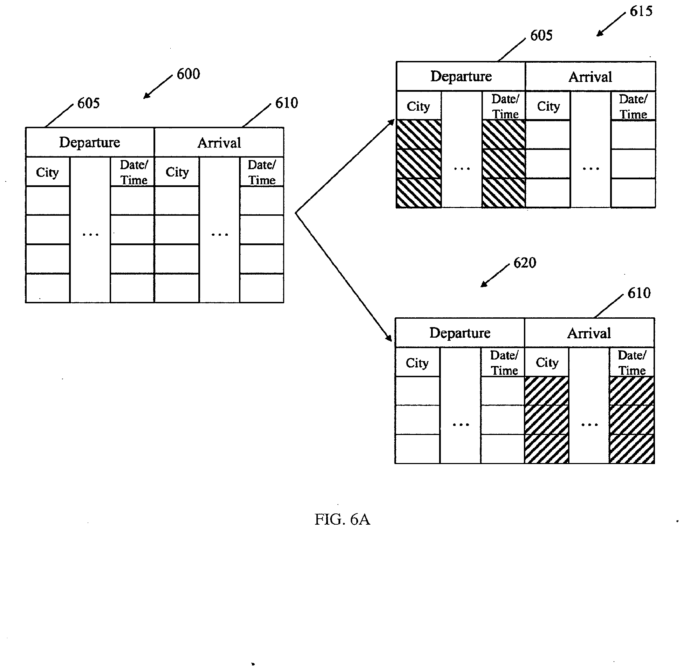

Now referring to FIGS. 6A to 6C, simplified examples relating to the subject disclosure will be described.

As described above, the database system or more specifically the table optimizer may determine one or more aggregations and/or one or more partitions.

FIG. 6A shows a simplified example of partitioning related to the new database table. For example, the table optimizer may determine that the new database table indicated by the new table configuration, which represents a non-partitioned database table 600, comprises information related to a number of data parameters such as, in the field of travel information and travel booking, departure-related data parameters 605 and arrival-related data parameters 610. The table optimizer may therefore determine partitions such as a first partition generated with respect to one or more departure-related data parameters 605 (hatched) such as e.g. departure city, departure date/time (e.g., year, month, day), and a second partition generated with respect to one or more arrival-related data parameters 610 (hatched) such as e.g. arrival city, arrival date/time (e.g., year, month, day) and generate a first partitioned database table 615 (which may form a first new database table) comprising the first partition and a second partitioned database table 620 (which may form a second new database table) comprising the second partition. The partitioning reduces the size of the partitioned database tables 615, 620 compared to the non-partitioned database table 600 and thus the amount of data to be searched or processed, thereby reducing the response time, the costs, etc.

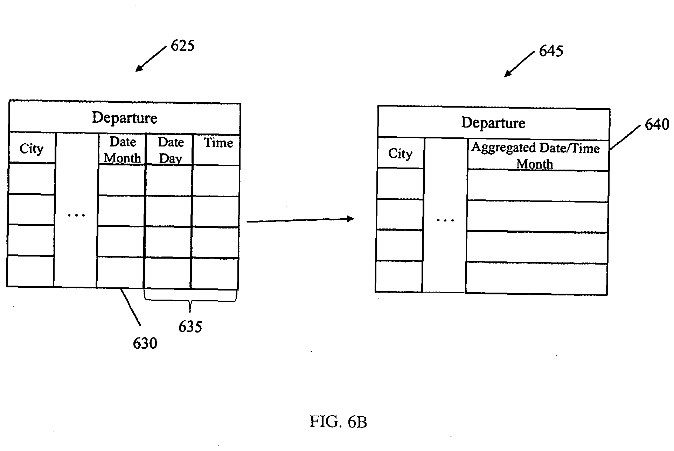

FIG. 6B shows a simplified example of aggregating related to the new database table. For example, the table optimizer may determine that the new database table indicated by the new table configuration, which represents a non-aggregated (i.e., prior to performing the aggregation) database table 625, may comprise information that can be aggregated to reduce the dimension of the new database table. That is, the table optimizer may determine that the non-aggregated database table 625 comprises departure-related date/time information including information of the departure month 630, the departure day and the departure time 635 which can be aggregated with respect to the departure month 630. The table optimizer may therefore aggregate the departure-related date/time information such that the information is combined to a period (aggregated data/time month 640) covering all departure days and times of a departure month, thereby generating an aggregated new database table 645 having a reduced dimension compared to the non-aggregated database table 625. The aggregation reduces the size of the non-aggregated database table 625 and thus the amount of data to be searched or processed, thereby reducing the response time, the costs, etc.

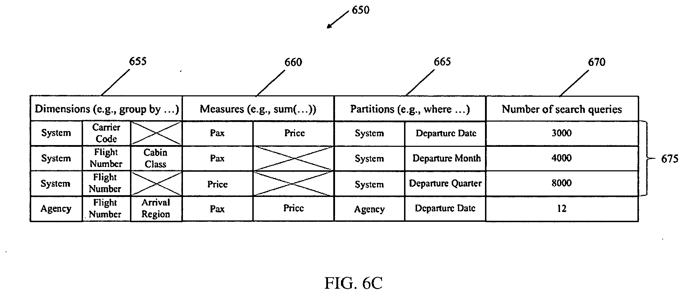

FIG. 6C shows a simplified example relating to the operation of the table optimizer according to the subject-disclosure. FIG. 6C illustrates a plurality of table configurations that indicate database tables used to process previous search queries (referred to as user query profiles 650). The user query profiles 650 are defined by dimensions 655 (e.g., data parameters used for grouping), measures 660 (e.g., a sum of data values such as a number of persons (Pax) or price), partitions 665 (e.g., data parameters used for filtering), and a number of previous search queries 670. The table optimizer generates a new table configuration (i.e., a new user query profile 675) based on the user query profiles 650. That is, the table optimizer finds a table configuration covering a maximum of the user query profiles 650 e.g. by finding similarities among the user query profiles 650. As described above, the table optimizer may use hierarchy information of the data model. In the example shown in FIG. 6C, the table optimizer may find, based on hierarchy information, that at least flight number and carrier code are related to similar information and that departure date, departure month and departure quarter all are related to departure date/time. Three user query profiles 675 having a similarity in the second dimension (i.e., carrier code and flight number) and a similarity in the second partition (i.e., departure date, departure month, departure quarter) are thus determined. Based on this determination, the table optimizer may group the three user query profiles 675 into a new user query profile covering information of the three user query profiles 675. The table generator may then generate one or more new database tables based on the new user query profile.

Finally, FIG. 7 is a diagrammatic representation of a computer system which provides the functionality of the database system 100 according to the subject disclosure. Within the database system 100 a set of instructions, to cause the computer system to perform any of the methodologies discussed herein, may be executed. The database system 100 includes at least one processor 720, a main memory 740 and a network interface device 780, which communicate with each other via a bus 710. Optionally, it may further include a static memory 760 and a disk-drive unit 770. A video display, an alpha-numeric input device and a cursor control device may be provided as examples of user interface 730. The network interface device 780 connects the computer system 700 at least to the clients 130, one or more databases acting as the original data source 120 and the history or logging database 730, if provided external to the database system 700, other computing devices, if provided external to the database system 100, the Internet and/or any other network. Also, the one or more databases acting as the original data source 120 and the history or logging database 730 may be provided as databases 742 within the main memory 740. A set of computer-executable instructions (i.e., computer program code) 744 embodying anyone, or all, of the methodologies described above, resides completely, or at least partially, in or on a machine-readable medium, e.g., the main memory 740 and/or the at least one processor 720. A machine-readable medium on which the code 744 resides may also be a non-volatile data carrier (e.g., a non-removable magnetic hard disk or an optical or magnetic removable disk) which is part of disk drive unit 770. The code 744 may further be transmitted or received as a propagated signal via the Internet through the network interface device 780. Basic operation of the database system 100 including user interface and network communication is controlled by operating system 746.

In general, the routines executed to implement the embodiments of the invention, whether implemented as part of an operating system or a specific application, component, program, object, module, or sequence of instructions, or even a subset thereof, may be referred to herein as "computer program code," or simply "program code." Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

Various program code described herein may be identified based upon the application within that it is implemented in specific embodiments of the invention. However, it should be appreciated that any program nomenclature that follows is used merely for convenience, and thus the invention should not be limited to be used solely in any specific application identified and/or implied by such nomenclature. Furthermore, given the generally endless number of manners in which computer programs may be organized into routines, procedures, methods, modules, objects, and the like, as well as the various manners in which program functionality may be allocated among various software layers that are resident within a typical computer (e.g., operating systems, libraries, API's, applications, applets, etc.), it should be appreciated that the embodiments of the invention are not limited to the specific organization and allocation of program functionality described herein.

The program code embodied in any of the applications/modules described herein is capable of being individually or collectively distributed as a program product in a variety of different forms. In particular, the program code may be distributed using a computer-readable storage medium having computer-readable program instructions thereon for causing a processor to carry out aspects of the embodiments of the invention.

Computer-readable storage media, which is inherently non-transitory, may include volatile and non-volatile, and removable and non-removable tangible media implemented in any method or technology for storage of information, such as computer-readable instructions, data structures, program modules, or other data. Computer-readable storage media may further include random access memory (RAM), read-only memory (ROM), erasable programmable read-only memory (EPROM), electrically erasable programmable read-only memory (EEPROM), flash memory or other solid state memory technology, portable compact disc read-only memory (CD-ROM), or other optical storage, magnetic cassettes, magnetic tape, magnetic disk storage or other magnetic storage devices, or any other medium that can be used to store the desired information and which can be read by a computer. A computer-readable storage medium should not be construed as transitory signals per se (e.g., radio waves or other propagating electromagnetic waves, electromagnetic waves propagating through a transmission media such as a waveguide, or electrical signals transmitted through a wire). Computer-readable program instructions may be downloaded to a computer, another type of programmable data processing apparatus, or another device from a computer-readable storage medium or to an external computer or external storage device via a network.

Computer-readable program instructions stored in a computer-readable medium may be used to direct a computer, other types of programmable data processing apparatus, or other devices to function in a particular manner, such that the instructions stored in the computer-readable medium produce an article of manufacture including instructions that implement the functions, acts, and/or operations specified in the flow charts, sequence diagrams, and/or block diagrams. The computer program instructions may be provided to one or more processors of a general-purpose computer, a special purpose computer, or other programmable data processing apparatus to produce a machine, such that the instructions, which execute via the one or more processors, cause a series of computations to be performed to implement the functions, acts, and/or operations specified in the flow charts, sequence diagrams, and/or block diagrams.

In certain alternative embodiments, the functions, acts, and/or operations specified in the flow charts, sequence diagrams, and/or block diagrams may be re-ordered, processed serially, and/or processed concurrently consistent with embodiments of the invention. Moreover, any of the flow charts, sequence diagrams, and/or block diagrams may include more or fewer blocks than those illustrated consistent with embodiments of the invention.

The terminology used herein is for the purpose of describing some embodiments only and is not intended to be limiting of the embodiments of the invention. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "include/s", "having", "has", "with", "comprised of", or variants thereof are used in either the detailed description or the claims, such terms are intended to be inclusive in a manner similar to the term "comprising".

While all of the invention has been illustrated by a description of various embodiments and while these embodiments have been described in considerable detail, it is not the intention to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the general inventive concept.

## Claims

1. A method of processing search queries in a database system, the database system comprising a plurality of database tables, each database table comprising data values of a plurality of data parameters, and a plurality of table configurations indicating a set of database tables from among the plurality of database tables used to process previous search queries, each previous search query including search data values of search data parameters corresponding to one or more data values of the plurality of data parameters included in the database tables, the method comprising:

- generating, based on the plurality of table configurations, a new table configuration indicating a new set of database tables to be used to process new search queries;
- generating a new database table corresponding to the new table configuration using the new set of database tables; and
- in response to receiving a new search query, selecting, from among the plurality of database tables including the new database table and based on the new search query, one or more database tables comprising data values of data parameters corresponding to search data parameters of the new search query.

2. The method of claim 1, further comprising:

- determining the plurality of table configurations based on a plurality of the previous search queries processed by the database system.

3. The method of claim 1 or 2, wherein generating a new table configuration comprises generating the new table configuration based on statistics of the plurality of previous search queries and/or costs of processing resources associated with using one or more of the plurality of database tables to process the previous search queries.

4. The method of any of claims 1 to 3, wherein generating a new table configuration comprises generating the new table configuration based on hierarchy information of a data model of the database system, the hierarchy information defining a hierarchy among the plurality of data parameters in the plurality of database tables.

5. The method of any of claims 1 to 4, wherein generating a new table configuration comprises classifying and ranking database tables among the plurality of database tables to determine the new set of database tables being optimal in terms of costs and response times.

6. The method of any of claims 1 to 5, wherein generating a new table configuration comprises:

- determining one or more aggregations for data values of the plurality of data parameters comprised by the new set of database tables, wherein the one or more aggregations reduce a dimension of one or more database tables among the new set of database tables; and/or
- determining one or more partitions of the plurality of data parameters comprised by the new set of database tables, wherein the one or more partitions split one or more database tables among the new set of database tables.

7. The method of any of claims 1 to 6, wherein generating a new database table comprises providing statistics on data values generated in the new database table.

8. The method of any of claims 1 to 7, wherein selecting one or more database tables comprises:

- analyzing the new search query to determine, from among the plurality of database tables including the new database table, one or more candidate tables comprising data values of data parameters corresponding to one or more search data parameters of the new search query;
- determining, for each candidate table, a number of data values to be scanned to search for the data values of data parameters corresponding to the one or more search data parameters of the new search query; and
- re-writing, based on a response time and/or an amount of processing resources associated with scanning the determined number of data values, the new search query to generate a modified search query to be used for selecting the one or more database tables.

9. The method of any of claims 1 to 8, wherein selecting one or more database tables comprises:

- analyzing the new search query to determine, from among the plurality of database tables including the new database table, one or more candidate tables comprising data values of data parameters corresponding to one or more search data parameters of the new search query; and
- evaluating the one or more candidate tables based on hierarchy information defining a hierarchy among the plurality of data parameters in the plurality of database tables to determine a smallest partition that is available to process the new search query.

10. The method of any of claims 1 to 9, wherein generating a new table configuration and generating a new database table are performed asynchronously to selecting one or more database tables.

11. An apparatus of a database system, the database system comprising a plurality of database tables, each database table comprising data values of a plurality of data parameters, and a plurality of table configurations indicating a set of database tables from among the plurality of database tables used to process previous search queries, each previous search query to search data values for a set of search data parameters, the apparatus comprising:

at least one processor; and
at least one memory storing instructions that, when executed by the at least one processor, cause the apparatus to:

- generate, based on the plurality of table configurations, a new table configuration indicating a new set of database tables to be used to process new search queries;
- generate a new database table corresponding to the new table configuration using the new set of database tables; and
- in response to receiving a new search query, select, from among the plurality of database tables including the new database table and based on the new search query, one or more database tables comprising data values of data parameters corresponding to search data parameters of the new search query.

12. The apparatus of claim 11, wherein the instructions cause the apparatus to perform the method of any of claims 2 to 10.

13. A database system, comprising:

a plurality of database tables, each database table comprising data values of a plurality of data parameters;
a plurality of table configurations indicating a set of database tables from among the plurality of database tables used to process previous search queries, each previous search query including search data values of search data parameters corresponding to one or more data values of the plurality of data parameters included in the database tables; and
the apparatus to process search queries of claim 11 or 12.

14. A computer program comprising instructions which, when the computer program is executed by at least one computer, cause the computer to carry out the method of any of claims 1 to 10.

15. A computer-readable data carrier having stored thereon the computer program of claim 14.

FIG. 1

FIG. 2A

FIG. 2B

300

```
        START

GENERATE
A NEW TABLE            310
CONFIGURATION

GENERATE
A NEW DATABASE TABLE  320

IN RESPONSE TO RECEIVING
A NEW SEARCH QUERY,
SELECT A DATABASE TABLE  330
TO PROCESS THE NEW
SEARCH QUERY

        END
```

FIG. 3

FIG. 4

Query

Table selector — 430

Table
statistics

Query
profiles

Table generator — 460

Table optimizer — 445

Table
configuration

Query
costs

FIG. 5

FIG. 6A

625

| Departure | | | | |
|---|---|---|---|---|
| City | | Date Month | Date Day | Time |
| | ... | | | |
| | | | | |
| | | | | |
| | | | | |

630    635

645

| Departure | | 640 |
|---|---|---|
| City | | Aggregated Date/Time Month |
| | ... | |
| | | |
| | | |
| | | |

FIG. 6B

650

| Dimensions (e.g., group by ...) | | | Measures (e.g., sum(...)) | | Partitions (e.g., where ...) | | Number of search queries |
|---|---|---|---|---|---|---|---|
| System | Carrier Code | ✕ | Pax | Price | System | Departure Date | 3000 |
| System | Flight Number | Cabin Class | Pax | ✕ | System | Departure Month | 4000 |
| System | Flight Number | ✕ | Price | ✕ | System | Departure Quarter | 8000 |
| Agency | Flight Number | Arrival Region | Pax | Price | Agency | Departure Date | 12 |

655   660   665   670

675

FIG. 6C

FIG. 7

Europäisches
Patentamt
European
Patent Office
Office européen
des brevets

# EUROPEAN SEARCH REPORT

**Application Number**

EP 24 31 5341

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | MICHAEL STILLGER ET AL: "LEO - DB2's LEarning Optimizer", PROCEEDINGS OF THE 27TH VERY LARGE DATA BASES CONFERENCE, ROMA, ITALY, 1 January 2001 (2001-01-01), pages 19-28, XP055443190, * the whole document * | 1-15 | INV. G06F16/2453 G06F16/2455 |
| X | V. MARKL ET AL: "LEO: An autonomic query optimizer for DB2", IBM SYSTEMS JOURNAL, vol. 42, no. 1, 1 January 2003 (2003-01-01), pages 98-106, XP055634366, US ISSN: 0018-8670, DOI: 10.1147/sj.421.0098 * the whole document * | 1-15 | |

-----

-----

**TECHNICAL FIELDS SEARCHED (IPC)**

G06F

The present search report has been drawn up for all claims

| Place of search | Date of completion of the search | Examiner |
|---|---|---|
| Berlin | 19 November 2024 | Barieux, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)